# EUROPÄISCHE PATENTSCHRIFT

(11) **EP 1 554 086 B1**
(45) Veröffentlichungstag und Bekanntmachung des Hinweises auf die Patenterteilung: **10.12.2008**
(21) Anmeldenummer: 03810397.4
(22) Anmeldetag: 08.10.2003
(51) Int. Cl.: B25F 5/02, B25F 5/00, H02K 7/14

(54) **ELEKTROWERKZEUG**
POWER TOOL
OUTIL ELECTRIQUE

(30) Priorität: 17.10.2002 DE 10248921
(43) Veröffentlichungstag der Anmeldung: 20.07.2005
(73) Patentinhaber: C. & E. Fein GmbH, 73529 Schwäbisch Gmünd-Bargau (DE)
(72) Erfinder: BRAUN, Sigmund, 72127 Kusterdingen (DE); RUDOLF, Boris, 70192 Stuttgart (DE)
(74) Vertreter: Gahlert, Stefan
(86) Internationale Anmeldenummer: PCT/EP2003/011097
(87) Internationale Veröffentlichungsnummer: WO 2004/041483

(56) Entgegenhaltungen:
- DE-A- 4 019 894
- DE-C- 884 163
- DE-C- 940 477
- FR-A- 1 136 606
- US-A- 2 987 636

## Beschreibung

Die Erfindung betrifft ein Elektrowerkzeug gemäß dem Oberbegriff von Anspruch 1.

Ein derartiges Elektrowerkzeug ist aus der DE-C-940477 bekannt. Bei dem bekannten Elektrowerkzeug handelt es sich um ein Elektrowerkzeug mit zwei Schalenhälfte mit längs geteiltem Gehäuse. Der Motor ist als frei tragender Flanschmotor ausgebildet, wobei sein Flansch mit der tragenden Gehäuseschale verschraubt ist. Hierdurch sind ein einfacher Aufbau und eine einfache Montage gewährleistet.

Derartige Elektrowerkzeuge sind seit vielen Jahren bekannt.

üblicherweise werden Elektrowerkzeuge mit Universalmotoren angetrieben. Ein Universalmotor weist Üblicherweise ein Gehäuse auf, innerhalb dessen ein Ständer mit Polfeldwicklungen vorgesehen ist, innerhalb dessen ein Anker drehbar angeordnet ist. Der Anker ist auf einer Motorwelle aufgenommen, die mittels Lagern am Gehäuse drehbar gelagert ist. Ferner weist ein Universalmotor einen Lüfter auf, der an einem ersten Ende des Ankers vorgesehen ist, sowie einen Kollektor mit Bürsten, der am anderen Ende des Ankers vorgesehen ist.

Derartige Universalmotoren haben sich zum Antrieb von Elektrowerkzeugen infolge des niedrigen Leistungsgewichtes und der universellen Einsetzbarkeit für Gleichstrom als auch für Wechselstrom bewährt. Nach wie vor besteht bei Elektrowerkzeugen die Forderung nach einer Gewichtsreduzierung, einer Leistungssteigerung oder nach einer Reduzierung der Baugröße bei gleichbleibender Leistung. Ferner steht infolge von Rationalisierungsbemühungen ständig die Forderung nach einem möglichst einfachen und kostengünstigen Aufbau und nach einer einfachen Montage im Raum. Des weiteren ist eine möglichst hohe zuverlässigkeit auch bei Einsatz im Dauerbetrieb angestrebt.

Bei Elektrowerkzeugen mit einem stabförmigen Gehäuse ergibt sich für eine bestimmte Leistungsklasse immer ein bestimmter Wellendurchmesser, weshalb sich infolge des notwendigen Kollektors und der zugeordneten Bürsten ein gewisser Mindestdurchmesser für ein Stabgehäuse ergibt. Soll nun die Leistung eines solchen Elektrowerkzeuges vergrößert werden, so ergibt sich gleichzeitig ein größerer Durchmesser des Stabgehäuses, was nachteilig für die Handhabbarkeit ist, da zu große Durchmesser nur schwer von Hand umfaßt werden können.

Der Erfindung liegt die Aufgabe zugrunde, ein verbessertes Elektrowerkzeug zu schaffen, das besonders ergonomisch gestaltet ist und ein möglichst niedriges Leistungsgewicht aufweist.

Diese Aufgabe wird durch ein Elektrowerkzeug gemäß Anspruch 1 gelöst.

Die Aufgabe der Erfindung wird auf diese Weise vollkommen gelöst.

Bei dem erfindungsgemäßen Elektrowerkzeug ist der Kollektor zwischen dem Lüfter und dem Wicklungspaket des Ankers angeordnet. Mit einer derartigen Anordnung läßt sich eine Kürzere Bauform des Elektrowerkzeuges realisieren. Auch auf diese Weise wird eine günstigere Ergonomie erzielt. Dies wirkt sich besonders dann vorteilhaft aus, wenn diese Ausführung mit der zuvor erwähnten selbsttragenden Ausführung des Stators und den beiden daran aufgenommenen Stützteilen kombiniert wird. Sofern Schalteer im Bereich des ersten Griffteils aufgenommen werden sollen, etwa bei einer Ausführung als optischer Schalter, ist ohnehin ein gewisser Platz zum Einbau des Schalters notwendig. Dieser kann gleichzeitig zum Einbau des Kollektors in diesem Bereich genutzt werden. Insoweit lassen sich Kollektor, Bürsten und ein oder mehrere Schalter im Bereich des ersten Stützteils unterbringen, wodurch insgesamt die Baugröße reduziert werden kann. Ferner wird kein Kohlestaub von den Bürsten durch den Motor geblasen. Erfindungsgemäß ist das erste Stützteil infolge des ohnehin für die Bürsten benötigten Platzes als Luftleitring für eine günstige Luftführung zum Gebläse hin ausgebildet. Dadurch kann gleichzeitig eine Düsenwirkung erzielt werden. Dies führt zu einer besseren Kühlung und damit zu einer verbesserten Leistung.

Gemäß einer vorteilhaften Weiterbildung der Erfindung wird eine selbsttragende Konstruktion verwendet, was zu einer Gewichtsreduzierung und damit zu einem verbesserten Leistungs gewicht führt. Dabei können an dem selbsttragenden Stator mittels der beiden Stützteile sämtliche weitere Komponenten des Elektrowerkzeuges befestigt sein. Hierzu gehören etwa ein Gehäuse des Elektrowerkzeuges, ein oder mehrere Schalter, sowie eine Steuerelektronik zur Steuerung des Elektromotors.

Vorzugsweise sind die Bürsten mit Bürstenhalter und mindestens einem Schalter an einem ersten der Stutzteile aufgenommen, während die Steuerelektronik und mindestens ein Schalter an einem zweiten der Stützteile aufgenommen sind.

Hierdurch ergibt sich ein besonders platzsparender und gewichtssparender Aufbau.

In weiter vorteilhafter Ausgestaltung der Erfindung sind die beiden Stützteile mit einem Gehäuse verbunden.

Auf diese Weise können an den Stützteilen die tragenden Teile des Elektrowerkzeuges befestigt sein und die Stützteile mit den verschiedensten Funktionen ausgestattet sein, während das Gehäuse, das zwecks einer ergonomischen Handhabung des Elektrowerkzeuges besonders angepaßt sein muß, an den Stützteilen befestigt sein kann. Hierdurch wird die Tragfunktion der Stützteile und die äußere Gestaltung des Gehäuses voneinander entkoppelt und die Montage erleichtert.

Gemäß einer weiteren Ausgestaltung der Erfindung ist ein Werkzeugkopf, in den das Werkzeug einsetzbar ist, an einem ersten der beiden Stützteile befestigt.

Dagegen ist die Motorwelle vorzugsweise in Lagern am Werkzeug kopf und an einem zweiten Stützteil gelagert.

Soweit notwendig, kann hierbei der Werkzeugkopf ein Getriebe umfassen.

Durch diese Merkmale wird ein modularer, besonders platzsparender und ergonomischer Aufbau des Elektrowerkzeuges unterstützt

Gemäß einer weiteren Ausführung der Erfindung ist zumindest am ersten Stützteil ein Schalter befestigt, der über eine am Gehäuse aufgenommene Aktivierungsfläche betätigbar ist.

Hierbei ist vorzugsweise sowohl am ersten als auch am zweiten Stützteil eine Aktivierungsfläche ausgebildet, so daß ein stabförmiges Elektrowerkzeug mit ein oder zwei Händen gehalten werden kann. Die Aktivierungsfläche selbst kann hierbei entweder unmittelbar an den betreffenden Stützteilen ausgebildet sein oder aber am Gehäuse, das sich über das betreffende Stützteil hinweg erstreckt.

Am ersten Stützteil sind gemäß einer weiteren Ausgestaltung der Erfindung einander gegenüberliegende Bürstenhalter aufgenommen.

Gemäß einer Weiterbildung dieser Ausführung weist das erste Stützteil Mittel zur elektrischen Verbindung der Bürsten mit dem Stator auf.

Auf diese Weise wird der Aufbau weiter vereinfacht. Hierzu kann beilspielsweise eine Kontaktierung unmittelbar an dem ansonsten aus isolierendem Werkstoff bestehenden Stützteil vorgesehen sein und über eine Steckverbindung zum Stator geführt sein. Gegebenenfalls kann auch ein Kabelanschluß vorgesehen sein.

In zusätzlicher Weiterbildung der Erfindung ist am ersten Stützteil eine im Bereich zwischen den beiden einander gegenüberliegenden Bürstenhaltern verjüngte Grifffläche vorgesehen.

Das Gehäuse kann in diesem Bereich etwa oval ausgebildet sein.

Durch diese Ausführung wird der Nachteil vermieden, der durch den im Bereich der beiden sich gegenüberliegenden Bürsten relativ großen Abstand bedingt ist. Anstatt die Grifffläche in diesem Bereich rotationssymmetrisch auszuführen, wird eine annähernd ovale oder elliptische Form der Grifffläche gewählt, so daß der größere Querschnitt zwischen den beiden Bürsten mit einem geringeren Querschnitt in dem dazwischenliegenden Bereich erreicht werden kann. Somit wird selbst bei einer höheren Leistung des Elektrowerkzeuges eine Grifffläche mit einem relativ geringen Griffabstand für die Finger ermöglicht.

Die beiden Stützteile bestehen vorzugsweise aus einem isolierenden Material, insbesondere aus Kunststoff.

Hierdurch wird zum einen ein günstiges Gewicht erzielt, und zum anderen lassen sich aus Kunststoff kompliziert geformte Teile in einem Gußverfahren herstellen. Insbesondere dann, wenn an den Stützteilen elektrische Schalter aufgenommen sein sollen, ist eine isolierende Ausführung besonders vorteilhaft. Dadurch läßt sich die notwendige Berührungssicherheit für Elektrowerkzeuge, die mit Netzspannung betrieben werden, auf einfachere Weise erzielen.

Insbesondere wenn das Elektrowerkzeug mit optischen Schaltern ausgestattet wird, läßt sich hierbei die Berührungssicherheit auf besonders einfache Weise herstellen.

Gemäß einer weiteren Ausgestaltung der Erfindung ist zumindest an einem der beiden Stützteile mindestens eine Aktivierungsfläche zur Betätigung eines Schaltelementes eines Schalters vorgesehen.

Mit einer derartigen Ausführung läßt sich ein besonders ergon mischer Aufbau erzielen, wiederum insbesondere dann, wenn als Schalter optische Schalter verwendet werden, die etwa mittels Lichtleitern arbeitet, zwischen denen die Signalübertragung durch ein Kontrollelement beeinflußt wird.

Gemäß einer weiteren Ausgestaltung der Erfindung ist ein Lüfter im Bereich zwischen dem ersten Stützteil und dem werkzeugkopf im Bereich zwischen dem ersten Stützteil und dem auf der Motorwelle gehalten.

Auf diese Weise kann der Lüfter vorteilhaft teilsweise in des erste Stützteil und teilweise in den Werkzeugkopf integriert werden, um eine besonders platzsparende Anordnung zu erreichen.

Wie vorstehend bereits erwähnt, wird eine Ausführung mit tern oder Sensoren insbesondere in Form von lichtoptischen Elementen besonders bevorzugt. Hierbei sind jeweils mindestens zwei Lichtleiter vorgesehen, denen ein Sender und ein Empfänger, sowie ein Kontrollelement zur Beeinflussung der zwischen den Lichtleitern übertragenen Lichtsignale zugeordnet sind.

Derartige optische Schalter oder Sensoren lassen sich in besonders platzsparender Weise an nahezu beliebigen Teilen des Elektrowerkzeuges unterbringen, wodurch insgesamt die Ergonomie deutlich verbessert werden kann.

Für eine derartige Ausführung mit Lichtleitern ist es bevorzugt, ein Tragelement zur Aufnahme der Lichtleiter zu verwenden, das einen Formkörper aufweist, in dem Vertiefungen vorgesehen ist, in die die Lichtleiter einlegbar sind.

Dies hat den Vorteil, daß die Lichtleiter besser gegen Erschütterungen, Umwelteinflüsse und dergleichen mehr geschützt sind, und daß die Montage vereinfacht wird, da die Lichtleiter vorher in das Tragelement integriert werden können, so daß nur noch ein bereits komplettiertes Tragelement montiert werden muß.

Vorzugsweise weist hierbei der Formkörper Aufnahmen für den Lichtleitern zugeordnete Sende- oder Empfangselemente oder für Schaltelemente zur Beeinflussung von Strahlung auf, die von den Lichtleitern übertragen wird.

Ferner kann der Formkörper Aufnahme für LEDs aufweisen.

Auf diese Weise können die Lichtleiter nebst der dazugehörigen Sende-oder Empfangselemente und nebst der zugehörigen Schaltelemente an den Tragelementen befestigt werden, wodurch insgesamt ein einfacherer Aufbau und eine einfachere Montage ermöglicht wird.

Des weiteren ist bevorzugt, daß der Formkörper mit dem Gehäuse des Elektrowerkzeugs zur Abdichtung der im Formkörper aufgenommenen Lichtleiter und/oder damit gekoppelter Sende- oder Empfangselemente oder Schaltelemente gegenüber Kontamination durch Staub oder dergleichen zusammenwirkt.

Dabei kann der Formkörper mit dem Gehäuse eine vollständig abgedichtete Baueinheit bilden.

Auf diese Weise wird eine größere Betriebssicherheit erreicht, da Staub und dergleichen durch das Tragelement von den Lichtleitern abgeschirmt werden. Dies ist insbesondere bei Elektrowerkzeugen wichtig, bei denen mit starkem Staubanfall zu rechnen ist, wie z.B. bei Schleifern.

In zusätzlicher Weiterbildung der Erfindung besteht der Formkörper aus einem vibrationsdämpfenden und/oder akustisch dämpfenden Material. Auch können Dämpfungselemente auf dem Formkörper z.B. durch Kleben befestigt sein. Hierbei kann es sich beispielsweise um Schaumstoffelemente handeln.

Auch durch diese Maßnahmen wird die Betriebssicherheit verbessert und zusätzlich eine günstigere Ergonomie erzielt.

Es versteht sich, daß die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine Aufsicht eines erfindungsgemäßen Elektrowerkzeuges in Form eines Winkelschleifers mit einem stabförmigen Gehäuse;
- Fig. 2: eine vereinfachte Darstellung des Elektrowerkzeuges gemäß Fig. 1, bei dem die Schutzhaube weggelassen wurde, jedoch, der im stabförmigen Gehäuse aufgenommene Motor nebst Stator und zwei daran befestigten Stützteilen eingezeichnet ist;
- Fig. 3: eine vergrößerte Seitenansicht des Elektrowerkzeuges gemäß Fig. 1, bei dem jedoch lediglich der Werkzeugkopf nebst Stator sowie erstem und zweitem Stützteil erkennbar ist;
- Fig. 4: einen Längsschnitt durch das Elektrowerkzeug gemäß Fig. 3;
- Fig. 5: einen Längsschnitt durch das Elektrowerkzeug gemäß Fig. 4, jedoch in vergrößerter Darstellung, in einer um 90°gegenüber der Schnittebene gemäß Fig. 4 versetzten Schnittebene;
- Fig. 6: eine vergrößerte Darstellung des Elektrowerkzeuges gemäß Fig. 5 im Bereich zwischen Werkzeugkopf und Stator, wobei zusätzlich ein Tragelement mit darin aufgenommenen Lichtleitern zur Ausbildung von optischen Schaltern dargestellt ist;
- Fig. 7: eine Gesamtansicht des Tragelementes gemäß Fig. 6;
- Fig. 8: eine Ansicht des Lichtleiterbündels, das in das Tragelement gemäß Fig. 7 eingesetzt ist;
- Fig. 9: eine Ansicht des Elektrowerkzeuges gemäß Fig. 2 schräg von oben, jedoch mit eingesetztem Tragelement nebst Lichtleitern;
- Fig. 10: eine Seitenansicht des Elektrowerkzeuges gemäß Fig. 9 und
- Fig. 11: einen Querschnitt durch das Elektrowerkzeug im Bereich der Bürsten.

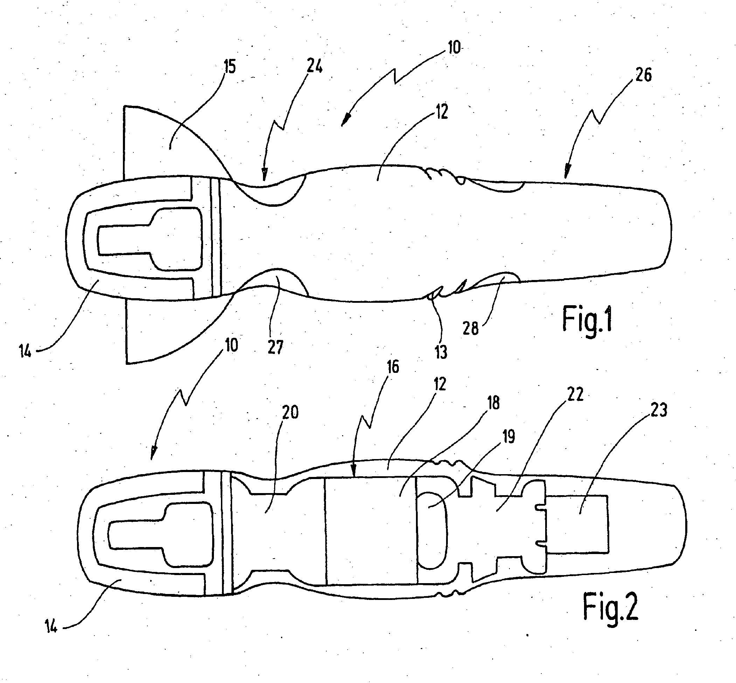

In Fig. 1 ist ein erfindungsgemäßes Elektrowerkzeug in der Aufsicht dargestellt und insgesamt mit der Ziffer 10 bezeichnet.

Im dargestelltes Fall handelt es sich um einen Winkelschleifer mit stabförmigem Gehäuse, der für einen Einhandbetrieb oder einen Zweihandbetrieb geeignet ist. Am Werkzeugkopf 14 des Elektrowerkzeuges 10 ist in üblicher Weise eine Schutzhaube 15 vorgesehen. Das Gehäuse 12 weist im Bereich des Übergangs zum Werkzeugkopf 14 eine Verjüngung auf, an der auf beiden Seiten Schalter vorgesehen sind, die über elastische Aktivierungsflächen 27 betätigbar sind. Das Gehäuse 12 ist in diesem Bereich mit einer Grifffläche 24 ausgeführt, die mit einer Hand von oben oder unten her ergriffen werden kann, wobei beide einander gegenüberliegende Aktivierungsflächen der Schalter ergriffen werden können.

Im davon abgewandten, hinteren Bereich des Gehäuses 12, der zum Ende hin annähernd konisch zuläuft, ist eine zweite Grifffläche 26 ausgebildet, die wiederum an jeder Seite eine Aktivierungsfläche 28 zur Betätigung eines darunter ausgebildeten Schalters aufweist.

Die Schalter sind vorzugsweise als optische Schalter ausgebildet, mit Lichtleitern, zwischen denen die übertragenen Signale über Kontrollelemente beeinflußbar sind, wobei den Lichtleitern Sende- und Empfangselemente zugeordnet sind, wie grundsätzlich aus der deutschen Patentanmeldung 101 41 161.8 und der parallelen US-Patentanmeldung 10/214,844 bekannt, die nicht vorveröffentlicht sind und deren Offenbarung hier vollständig einbezogen wird.

In Fig. 1 sind ferner noch die Luftahsaugschlitze 13 für den Lüfter des Motors erkennbar, die sich im dem Werkzeugkopf 14 abgewandten Bereich kurz vor den Aktivierungsflächen 28 der Schalter befinden.

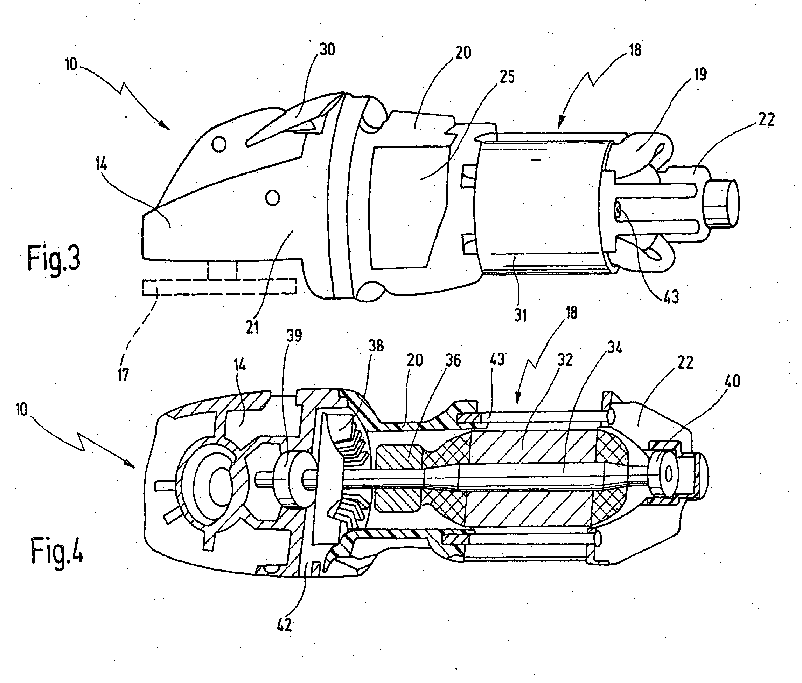

In Fig. 2 sind die Hauptbestandteile des Elektrowerkzeuges 10 innerhalb des Gehäuses 12 erkennbar. Das Elektrowerkzeug 10 ist erfindungsgemäß mit einem selbsttragenden Elektromotor 16 ausgestattet, der einen selbsttragenden Stator 18 aufweist, an dessen erstem, dem Werkzeugkopf 14 zugewandten Ende ein erstes Stützteil 20 befestigt ist, das vorzugsweise aus Kunststoff besteht. Auf der gegenüberliegenden zweiten Seite des Stators 18 ist ein zweites Stützteil 22 aus Kunststoff vorgesehen. Beide Stützteile 20, 22 sind in nachfolgend noch anhand von Fig. 4 beschriebener Weise durch den Stator 18 hindurch verschraubt. Am zweiten Stützteil 22 ist ferner noch eine Steuerelektronik 23 aufgenommen, die lediglich schematisch angedeutet ist. Der-Werkzeugkopf 14 ist am ersten Stützteil 20 aufgenommen. Das Gehäuse 12, durch das das Elektrowerkzeug 10 nach außen umschlossen ist, ist an beiden Stützteilen 20, 22 befestigt. Insgesamt ist somit der Motor 16 zusammen mit den Stützteilen 20, 22 die tragende Konstruktion, an der sämtliche andere Komponenten des Elektrowerkzeugs 10 befestigt sind.

Durch diese Bauart läßt sich eine besonders platzsparende und gewichtssparende Konstruktion erzielen, die gleichfalls eine besonders günstige Montage ermöglicht.

In Fig. 3 ist das Elektrowerkzeug 10 gemäß Fig. 2 vergrößert dargestellt, in einer etwa um 90° gegenüber der Position gemäß Fig. 2 verdrehten Anordnung, wobei das Gehäuse jedoch abgenommen ist und im wesentlichen der Motor nebst den beiden Stützteilen dargestellt ist.

Aus Fig. 3 ist die Form der beiden Stützteile 20, 22 gut zu ersehen, Am ersten Stützteil 20 sind auf jeder Seite Aufnahmeflächen 25 zur Aufnahme von optischen Schaltern vorgesehen, wie nachfolgend noch näher erläutert wird.

In Fig. 3 ist ferner noch eine im Werkzeugkopf 14 aufgenommene Werkzeugantriebswelle nebst einem daran befestigten Werkzeug schematisch mit den gestrichelten Linien 17 angedeutet.

Der Stator 18 weist ein Statorblechpaket 31 auf, durch das hindurch das erste und das zweite Stützteil 20, 22 mittels Schrauben 43 zu einer kompakten, mit dem Statorblechpaket 31 fest verbundenen Einheit verschraubt sind.

Der nähere Aufbau des Elektrowerkzeuges 10 ist aus Fig. 4 zu ersehen, die einen Längsschnitt durch das Elektrowerkzeug gemäß Fig. 3 zeigt. Der Motor 16 weist einen Anker 32 auf, der auf einer Motorwelle 34 befestigt ist. Am dem Werkzeugkopf 14 abgewandten Ende der Motorwelle 34 ist diese mittels eines Lagers 40 gelagert, das in einer Lagerschale des zweiten Stützteils 22 gehaltert ist. Am gegenüberliegenden Ende ist die Motorwelle 34 mittels eines Lagers 39 am Werkzeugkopf 14 gelagert. Im Übergangsbereich zwischen dem ersten Stützteil 20 und dem Werkzeugkopf 14 ist ein Lüfter 38 erkennbar, der auf der Motorwelle 34 befestigt ist. Dem Lüfter 38 sind im Werkzeugkopf 14 Luftaustrittsöffnungen 42 zugeordnet.

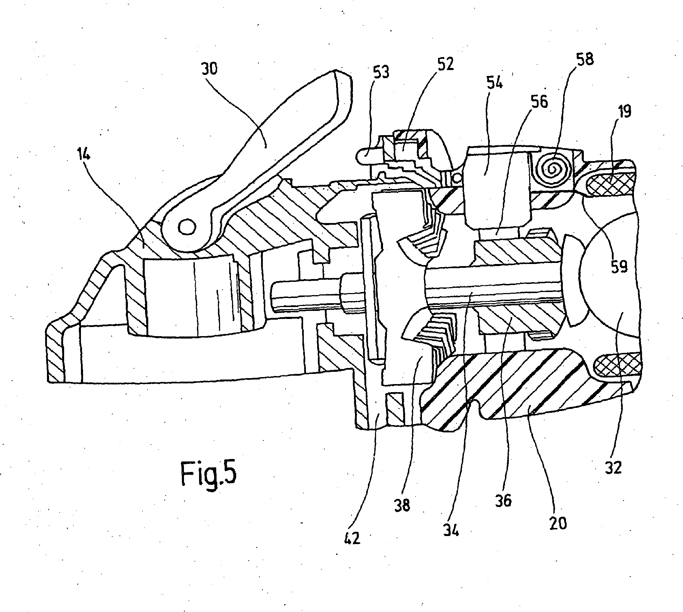

Die Ansaugung von Luft erfolgt also durch den Elektromotor 16 über Ansaugöffnungen 13 (Fig. 1) am gegenüberliegenden Ende, während der Luftaustritt der Kühlluft am Werkzeugkopf 14 erfolgt, was vorteilhaft ist, um den Eintritt von Fremdpartikeln in den Motor so gering wie möglich zu halten. Denn naturgemäß entsteht der stärkste Staubanfall im Bereich des Werkzeugkopfes 14. Zwischen dem Anker 32 und dem Lüfter 38 ist der Kollektor 36 des als Universalmotor ausgeführten Elektromotors 16 vorgesehen. Die zugeordneten Bürsten werden nachfolgend noch anhand von Fig. 5 näher erläutert.

Aus Fig. 4 ist ferner noch die Verschraubung der beiden Stützteile 20, 22 durch das Statorblechpaket 31 hindurch erkennbar. Der Werkzeugkopf 14 ist in nicht näher dargestellter Weise mit dem ersten Stützteil 20 verschraubt.

Fig. 5 zeigt eine vergrößerte Schnittdarstellung des Elektrowerkzeuges 10 im seitlichen Längsschnitt im Bereich zwischen Werkzeugkopf 14 und Anker 32.

Am ersten Stützteil 20 sind einander gegenüberliegend an der Oberseite des Elektrowerkzeuges 10 und um 180° demgegenüber versetzt an der Unterseite je ein Bürstenhalter 54 befestigt, in dem eine Bürste (Kohle) 56 aufgenommen ist. Zum Andruck der Bürsten 56 dient je eine Bürstenfeder 58, die in Fig. 5 schematisch dargestellt ist. Es ist denkbar, in dem aus isolierendem Kunststoff. hergestellten ersten Stützteil 20 eine Kontaktierungsmöglichkeit für die Bürste 56 unmittelbar vorzusehen, durch die eine elektrische Verbindung 59 zum Stator 18 bzw. zu den Feldwicklungen 19 geschaffen wird. Natürlich kann dies auch auf herkömmliche Weise durch Anschlußkabel erfolgen.

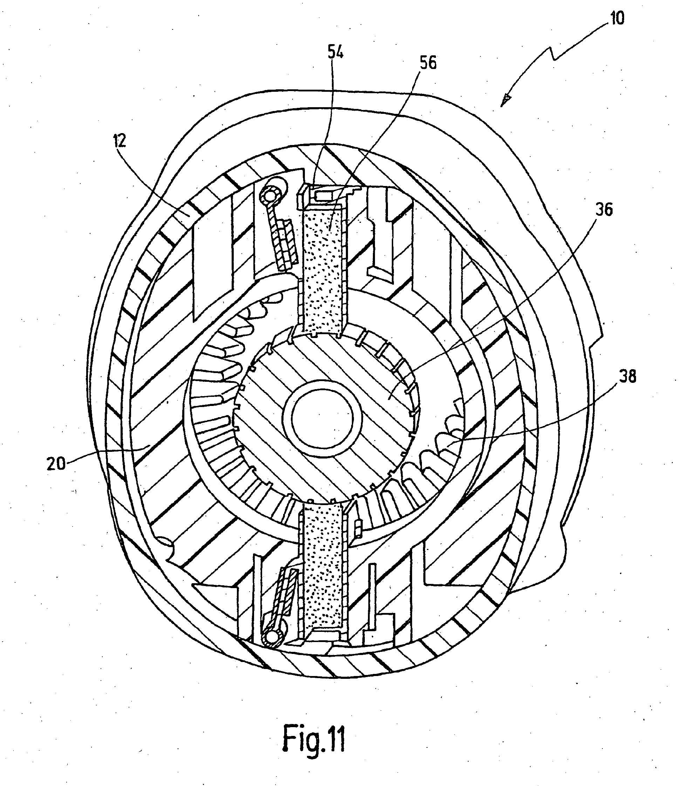

Aus der perspektivischen Querschnittsdarstellung gemäß Fig. 11 erkennt man, daß das Gehäuse 12 im Bereich der Bürsten 56 oval ausgebildet ist. Da der Durchmesser in der einen Richtung durch die Bürsten 56. vorgegeben ist, wird durch die ovale Form in der anderen dazu senkrechten Richtung ein geringerer Durchmesser erreicht. Dies ergibt eine verbesserte Ergonomie beim Umgreifen des Gehäuses 12 an dieser Stelle.

Das erste Stützteil 20 ist als Luftleitring ausgestaltet, dessen Innenfläche eine gezielte Luftführung von Kühlluft durch den Motor 16 zum Gebläse 38 hin gewährleistet, wobei gleichzeitig eine Düsenwirkung erzielt werden kann.

In Fig. 5 ist ferner noch ein am Werkzeugkopf 14 aufgenommener Spannhebel 30 erkennbar, der zum Ein- und Ausspannen des Werkzeuges 17 dient. Da das Elektrowerkzeug 10 nur mit geschlossenem Spannhebel 30 betrieben werden soll, ist dem Spannhebel 30 ein Sensor zugeordnet, durch den laufend überprüft wird, ob sich der Spannhebel 30 in seiner geschlossenen Spannstellung befindet. Hierzu ist am oberen Ende des Werkzeugkopfes 14 ein lichtoptischer Schalter 52 vorgesehen, der über ein durch den Spannhebel 30 verschiebbares Schaltelement 53 betätigbar ist. Ist der Spannhebel 30 geschlossen, so wird das Schaltelement 53 verschoben, was zur Freigabe eines Lichtstrahls führt, der über Lichtleiter übertragen wird, was von einer zugeordneten Auswertelogik ausgewertet wird.

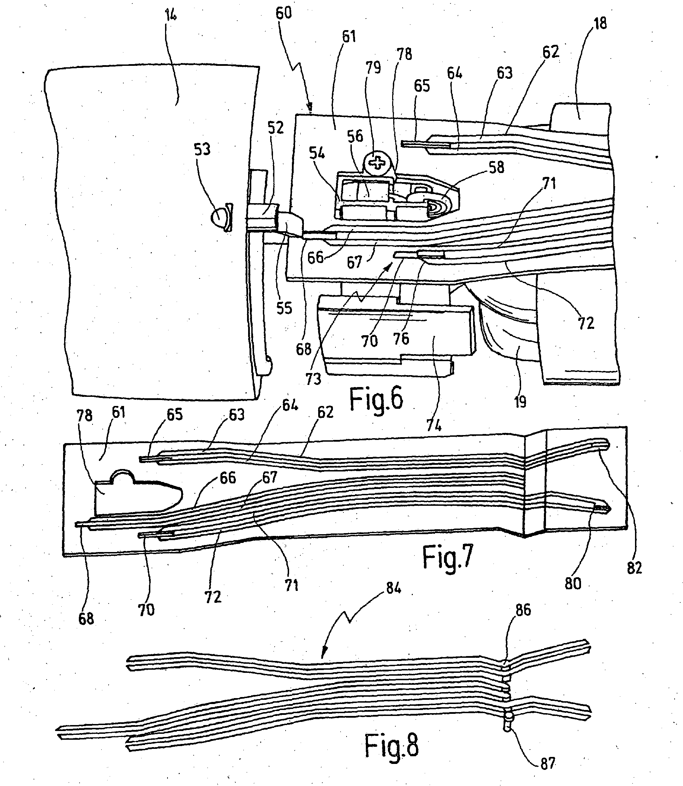

Aus Fig. 6 ist der Aufbau der beim Elektrowerkzeug 10 verwendeten optischen Schalter näher zu ersehen. Jeder optische Schalter weist zwei Lichtleiter auf, von denen einer als Sendeleiter ausgeführt ist, der mit einer LED gekoppelt ist, während der andere Lichtleiter als Empfangsleiter ausgebildet ist und mit einer zugeordneten Auswerteeinheit verbunden ist. Im dargestellten Fall enden zwei zugeordnete Lichtleiter jeweils in einem gewissen Abstand in Form von Prismen, so daß ein Lichtübertritt dazwischen erfolgen kann. Befindet sich keinerlei Objekt zwischen diesen beiden Enden, so erfolgt ein Lichtübertritt aus dem Sendeleiter in den Empfangsleiter, was von der Auswertelogik registriert wird.

In Fig. 6 sind nun insgesamt sechs Lichtleiter 63, 64, 66, 67, 71, 72 dargestellt, die jeweils in Vertiefungen 62 eines Formkörpers 61 aufgenommen sind. Der Formkörper 61 ist Teil eines Tragelementes 61, dessen Form aus Fig. 7 näher zu ersehen ist. Bei dem Formkörper 61 handelt es sich im wesentlichen um eine Platte aus einem geeignete Kunststoff, der in der Erstrekkungsrichtung der darin aufgenommenen Lichtleiter 63 bis 72 in geeigneter Weise gekrümmt ist. Das Kunststoffmaterial des Formkörpers 61 weist vorzugsweise mechanische und gegebenenfalls akustisch dämpfende Eigenschaften auf, um Erschütterungen besser zu dämpfen. Da die Lichtleiter 63-72 in zugeordneten Vertiefungen in Form von Aufnahmenuten 62 eingelegt sind, sind sie gegen Umwelteinflüsse von außen besonders gut geschützt, so daß ein zuverlässiger Betrieb gewährleistet ist. Außerdem wird ein günstiges Signal-/Rauschverhältnis infolge der durch die Vertiefungen 62 vorgegebenen Abstände sichergestellt und die Lichtleiter in ihrem Verlauf fixiert. Hierzu können vorzugsweise starre Lichtleiter verwendet werden, die in der gewünschten Form dreidimensional gekrümmt sind.

Im dargestellten Fall ist je zwei Enden von einander zugeordneten Lichtleitern 63, 64 bzw. 66, 67 bzw. 71, 72 je eine längliche Ausnehmung 65 bzw. 68 bzw. 70 zugeordnet, die sich von den beiden Enden im Bereich der Prismen aus nach außen hin erstreckt. In diese Ausnehmung 65, 68, 70 kann ein zugeordnetes Schaltelement eingreifen, durch das der Lichtübertritt zwischen den beiden Enden unterbrochen werden kann.

In Fig. 6 ist der Ausnehmung 68 zwischen den beiden Lichtleitern 66, 67 ein Schieber 55 zugeordnet, der mittels des Schaltelementes 53 in den Bereich zwischen den beiden Prismenenden verschiebbar ist, um so den Lichtübertritt zu unterbrechen. Bei dem Schalter 73, dem die beiden Lichtleiter 71, 72 zugeordnet sind, ist im Bereich der Ausnehmung 70 ein Schaltelement 74 vorgesehen, das am ersten Stützteil 20 verschwenkbar aufgenommen ist und mit einer Schaltzunge 76 in den Bereich der Ausnehmung 70 zwischen den beiden Prismenenden der Lichtleiter 71, 72 gelangen kann.

Das Tragelement 60 weist ferner eine geeignete Ausnehmung auf, um eine Montage des Bürstenhalters 54 mit Bürste 56 und Bürstenfeder 58 zu erlauben. In Fig. 6 ist eine zugeordnete Befestigungsschraube 79 erkennbar.

Fig. 7 zeigt eine Gesamtansicht des Tragelementes 60 nebst Lichtleitern 63-72.

Aus Fig. 8 ist zu ersehen, wie die betreffenden Lichtleiter 63-72 zu einem vorgefertigten Lichtleiterbündel 84 zusammengefaßt sein können, die vorzugsweise starr ausgebildet sind und über eine gemeinsame Aufnahme 86 zusammengehalten sind. In dieser Aufnahme sind Vertiefungen zum Anschluß von LEDs für zugeordnete Sender-Dioden aufgenommen sowie Anschlüsse für Empfänger-Elemente. In Fig. 8 ist lediglich eine LED 87 beispielhaft angedeutet.

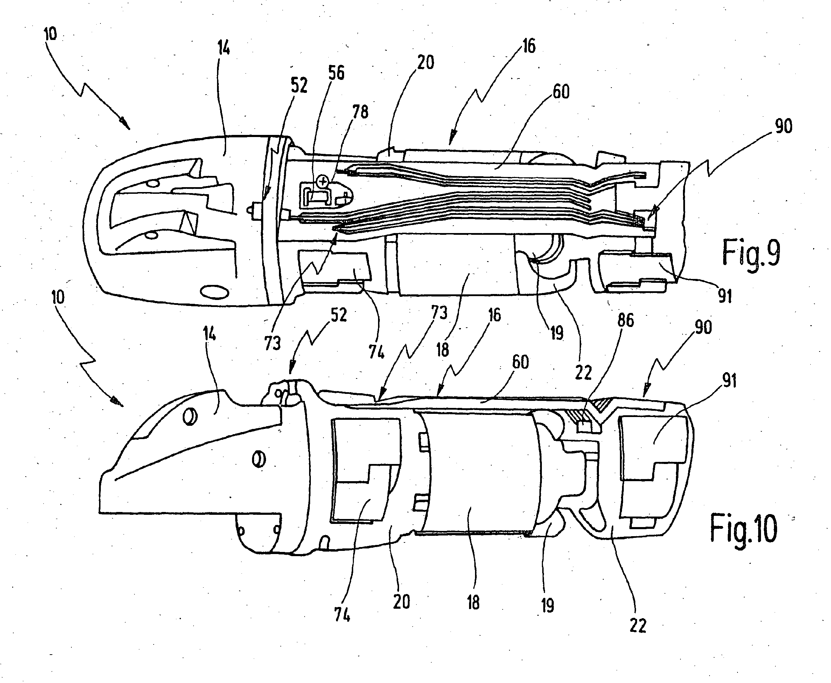

Aus den Fig. 9 und 10 ist zu ersehen, wie das Tragelement 60 mit den darin aufgenommenen Lichtleitern auf die Oberseite der beiden Stützteile 20, 22 aufgesetzt wurde und unmittelbar am Werkzeugkopf 14 eingesteckt wurde. Bei nachfolgend aufgesetztem Gehäuse dichtet dieses vorzugsweise mit den Rändern des Tragelementes 60 ab. Das Tragelement 60 liegt somit in einer unmittelbar an das aufgesetzte Gehäuse angrenzenden Position, wobei die darin aufgenommenen Lichtleiter gegen etwa eindringenden Schmutz oder dergleichen sicher geschützt sind.

In Fig. 10 ist ferner noch der leicht abgewinkelte Verlauf des Tragelementes 60 im Bereich der Aufnahme 86 erkennbar, an der die Sender-LEDs und Empfänger-Elemente angeordnet sind. Gleichfalls sind aus Fig. 10 die den Schaltern 73 und 90 zugeordneten Schaltelemente 74 und 91 erkennbar, durch die die Lichtübertragung zwischen zusammenwirkenden Lichtleitern unterbrochen werden kann. Denkbar ist natürlich auch eine Einstrahlung von hinten.

## Patentansprüche

1. Elektrowerkzeug mit einem Elektromotor (16) zum Antrieb eines Werkzeugs (17) mit einer Motorwelle (34), einem Stator (18), einem Anker (32) mit einem Wicklungspaket, einem Kollektor (36) mit Bürsten (56) und einem Lüfter (38), wobei der Kollektor (36) zwischen dem Lüfter (38) und dem Wicklungspaket des Ankers (32) angeordnet ist, wobei an den beiden Enden des Stators (18) ein erstes Stützteil (20) und ein zweites Stützteil (22) befestigt sind, und wobei die Bürsten (56) vom ersten Stützteil (20) umschlossen sind, **dadurch gekennzeichnet, daß** das erste Stützteil (20) als Luftleitring ausgebildet ist, der eine Luftführung zwischen dem Lüfter (38) und dem gegenüberliegenden Ende des Elektromotors (16) entlang von Anker (32) und Bürsten (56) erlaubt.

2. Elektrowerkzeug nach Anspruch 1, **dadurch gekennzeichnet, daß** der Stator (18) als selbsttragenden Stator (18) ausgebildet ist, daß die Bürsten (56) mit Bürstenhalter (54) am ersten Stützteil (20) befestigt sind, und daß die Motorwelle (34) an den beiden Stützteilen (20, 22) oder daran befestigten Teilen gelagert ist.

3. Elektrowerkzeug nach Anspruch 1 oder 2, **dadurch gekennzeichnet, daß** mindestens ein Schalter (73, 90) an den Stützteilen (20, 22) befestigt ist.

4. Elektrowerkzeug nach Anspruch 1, 2 oder 3, **dadurch gekennzeichnet, daß** eine Steuerelektronik (23) zur Steuerung des Elektromotors (16) an einem der beiden Stützteile (22) aufgenommen ist.

5. Elektrowerkzeug nach einem der vorhergehenden Ansprüche, **dadurch gekennzeichnet, daß** die Bürsten (56) mit Bürstenhalter (54) und mindestens ein Schalter (73) an dem ersten (20) der Stützteile (20, 22) aufgenommen sind, und daß die Steuerelektronik (23) und mindestens ein Schalter (90) an dem zweiten (22) der Stützteile (20, 22) aufgenommen sind.

6. Elektrowerkzeug nach einem der vorhergehenden Ansprüche, **dadurch gekennzeichnet, daß** die beiden Stützteile (20, 22) mit einem Gehäuse (12) verbunden sind.

7. Elektrowerkzeug nach einem der vorhergehenden Ansprüche, **dadurch gekennzeichnet, daß** ein Werkzeugkopf (14), in den das Werkzeug (17) einsetzbar ist, an dem ersten Stützteil (20) befestigt ist.

8. Elektrowerkzeug nach Anspruch 7, **dadurch gekennzeichnet, daß** die Motorwelle (34) in Lagern (39, 40) am werkzeugkopf (14) und an dem zweiten Stützteil (22) gelagert ist.

9. Elektrowerkzeug nach Anspruch 8, **dadurch gekennzeichnet, daß** der Werkzeugkopf (14) ein Getriebe (21) aufweist.

10. Elektrowerkzeug nach einem der Ansprüche 6 bis 9, **dadurch gekennzeichnet, daß** zumindest am ersten Stützteil (20) ein Schalter (73, 90) befestigt ist, der über eine am Gehäuse (12) aufgenommene Aktivierungsfläche (27, 28) betätigbarist.

11. Elektrowerkzeug nach einem der vorhergehenden Ansprüche,
**dadurch gekennzeichnet, daß** am ersten Stützteil (20) einander gegenüberliegende Bürstenhalter (54) aufgenommen sind.

12. Elektrowerkzeug nach einem der vorhergehenden Ansprüche,
**dadurch gekennzeichnet, daß** am ersten Stützteil (20) Mittel (59) zur elektrischen Verbindung der Bürsten (56) mit dem Stator (18) vorgesehen sind.

13. Elektrowerkzeug nach Anspruch 11 oder 12, **dadurch gekennzeichnet, daß** am ersten Stützteil (20) eine im Bereich zwischen den beiden einander gegenüberliegenden Bürstenhaltern (54) verjüngte Grifffläche (24) vorgesehen ist.

14. Elektrowerkzeug nach einem der Ansprüche 11 bis 13, **gekennzeichnet durch** ein Gehäuse (12), das im Bereich der Bürsten (56) oval ausgebildet ist.

15. Elektrowerkzeug nach einem der vorhergehenden Ansprüche,
**dadurch gekennzeichnet, daß** zumindest an einem der beiden Stützteile (20, 22) mindestens eine Aktivierungsfläche (27, 28) zur Betätigung eines Schaltelements (74, 91) eines Schalters (73, 90) vorgesehen ist.

16. Elektrowerkzeug nach einem der vorhergehenden Ansprüche,
**dadurch gekennzeichnet, daß** die Stützteile (20, 22) aus einem isolierenden Material, vorzugsweise aus einem Kunststoff hergestellt sind.

17. Elektrowerkzeug nach einem der vorhergehenden Ansprüche,
**dadurch gekennzeichnet, daß** mindestens ein Schalter (52, 73, 90) oder Sensor vorgesehen ist, der zwei Lichtleiter (63, 64, 66, 67, 71, 72), einen Sender und einen Empfänger, sowie ein Kontrollelement (53, 74, 91) zur Beeinflussung der zwischen den Lichtleitern (63, 64, 66, 67, 71, 72) übertragenen Lichtsignale aufweist.

18. Elektrowerkzeug nach Anspruch 17, **dadurch gekennzeichnet, daß** ein Tragelement (60) zur Aufnahme der Lichtleiter (63, 64, 66, 67, 71, 72) vorgesehen ist, das einen formkörper (61) aufweist, in dem eine Mehrzahl von Vertiefungen (62) vorgesehen ist, in die Lichtleiter (63, 64, 66, 67, 71, 72) einlegbar sind.

19. Elektrowerkzeug nach Anspruch 18, **dadurch gekennzeichnet, daß** der Formkörper (61) Aufnahmen (86) für den Lichtleitern (63, 64, 66, 67, 71, 72) zugeordnete Sende- oder Empfangselemente (87) oder für Schaltelemente zur Beeinflussung von Strahlung aufweist, die von den Lichtleitern (63, 64, 66, 67, 71, 72) übertragen wird.

20. Elektrowerkzeug nach Anspruch 18 oder 19, **dadurch gekennzeichnet, daß** der Formkörper (61) Aufnahmen (86) zur Halterung von LEDs (87) aufweist.

21. Elektrowerkzeug nach Anspruch 18, 19 oder 20, **dadurch gekennzeichnet, daß** der Formkörper (61) mit dem Gehäuse (12) des Elektrowerkzeuges (10) zur Abdichtung der im Formkörper (61) aufgenommenen Lichtleiter (63, 64, 66, 67, 71, 72) und/oder damit gekoppelter Sende- oder Empfangselemente (87) oder Schaltelemente (74, 91) gegenüber Kontamination durch Staub oder dergleichen zusammenwirkt.

22. Elektrowerkzeug nach Anspruch 21, **dadurch gekennzeichnet, daß** der Formkörper (61) mit dem Gehäuse (12) eine vollständig abgedichtete Baueinheit bildet.

23. Elektrowerkzeug nach einem der Ansprüche 18 bis 22, **dadurch gekennzeichnet, daß** der Formkörper (61) aus einem vibrationsdämpfenden und/oder akustisch dämpfenden Materieal besteht.

24. Elektrowerkzeug nach einem der vorhergehenden Ansprüche, **gekennzeichnet durch** mindestens drei von Hand zu bedienende Schalter (27, 28), die vorzugsweise eine Bedienung von vorn (rechts oder links) oder von hinten erlauben.

## Claims

1. An electrical tool comprising an electric motor (16) for driving a tool (17), comprising a motor shaft (34), a stator (18), an armature (32), a commutator (36) with brushes (56), and a fan (38), wherein the commutator (36) is arranged between the fan (38) and the winding core of the armature (32), wherein a first supporting part (20) and a second supporting part (22) are attached to both ends of the stator (18), and wherein the brushes (56) are surrounded by the first supporting part (20), **characterized in that** the first supporting part (20) is configured as an air guide ring which allows an air flow between the fan (38) and the opposite end of the electric motor (16) along the armature (32) and the brushes (56).

2. The electrical tool according to claim 1, **characterized in that** the stator (18) is configured as a self-supporting stator (18), **in that** the brushes (56) are attached to the first supporting part (20) by means of a brush holder (54), and **in that** the motor shaft (34) is mounted on both supporting parts (20, 22) or on parts attached thereto.

3. The electrical tool according to claim 1 or 2, **characterized in that** at least one switch (73, 90) is attached to the supporting parts (20, 22).

4. The electrical tool according to claim 1, 2 or 3, **characterized in that** control electronics (23) for controlling the electric motor (16) are held on one of the two supporting parts (22).

5. The electrical tool according to any of the proceeding claims, **characterized in that** the brushes (56) together with the brush holder (54) and at least one switch (73) are held on the first (20) of the supporting parts (20, 22), and **in that** the control electronics (23) and at least one switch (90) are held on the second (22) of the supporting parts (20, 22).

6. The electrical tool according to any of the proceeding claims, **characterized in that** the two supporting parts (20, 22) are connected to a housing (12).

7. The electrical tool according to any of the proceeding claims, **characterized in that** a tool head (14), into which the tool (17) can be inserted, is attached to the first supporting part (20).

8. The electrical tool according to claim 7, **characterized in that** the motor shaft (34) is mounted in bearings (39, 40) on the tool head (14) and on the second supporting part (22).

9. The electrical tool according to claim 8, **characterized in that** the tool head comprises a gearbox (21).

10. The electrical tool according to any of claims 6 to 9, **characterized in that** a switch (73, 90) is attached at least to the first supporting part (20) and can be operated via an activation surface (27, 28) which is held on the housing (12).

11. The electrical tool according to any of the proceeding claims, **characterized in that** mutually opposite brush holders (54) are held on the first supporting part (20).

12. The electrical tool according to any of the proceeding claims, **characterized in that** means (59) for electrical connection of the brushes (56) to the stator (18) are provided on the first supporting part (20).

13. The electrical tool according to claim 11 or 12, **characterized in that** a grip surface (24), which tapers in the area between the two mutually opposite brush holders (54), is provided on the first supporting part (20).

14. The electrical tool according to any of claims 11 to 13, **characterized by** a housing (12) which is oval in the area of the brushes (56).

15. The electrical tool according to any of the proceeding claims, **characterized in that** at least one activation surface (27, 28) for operation of a switching element (74, 91) or a switch (73, 90) is provided at least on one of the two supporting parts (20, 22).

16. The electrical tool according to any of the proceeding claims, **characterized in that** the supporting parts (20, 22) are produced from insulating material, preferably from a plastic.

17. The electrical tool according to any of the proceeding claims, **characterized in that** at least one switch (52, 73, 90) or a sensor are provided and have two optical fibers (63, 64, 66, 67, 71, 72), a transmitter and a receiver, as well as a monitoring element (53, 74, 91) for influencing the light signals which are transmitted between the optical fibers (63, 64, 66, 67, 71, 72).

18. The electrical tool according to 17, **characterized in that** a mounting element (60) is provided for holding the optical fibers (63, 64, 66, 67, 71, 72) and has a molding (61) in which two or more recesses (62) are provided, in which optical fibers (63, 64, 66, 67, 71, 72) can be inserted.

19. The electrical tool according to 18, **characterized in that** the molding (61) comprises holders (86) for transmitting or receiving elements (87) which are associated with the optical fibers (63, 64, 66, 67, 71, 72), or for switching elements for influencing radiation which is transmitted by the optical fibers (63, 64, 66, 67, 71, 72).

20. The electrical tool according to claim 18 or 19, **characterized in that** the molding (61) comprises holders (86) for holding LEDs (87).

21. The electrical tool according to claim 18, 19 or 20, **characterized in that** the molding (61) interacts with the housing (12) of the electrical tool (10) in order to seal the optical fibers (63, 64, 66, 67, 71, 72) which are held in the molding (61), and/or transmitting or receiving elements (87) or switching elements (74, 91), which are coupled to them, against contamination by dust or the like.

22. The electrical tool according to claim 21, **characterized in that** the molding (61) together with the housing (12) forms a completely sealed unit.

23. The electrical tool according to any of claims 18 to 22, **characterized in that** the molding (61) is composed of a vibration-damping and/or acoustically damping material.

24. The electrical tool according to any of the proceeding claims, **characterized in** by at least three manually operated switches (27, 28), which preferably allow operation from the front (on the right or left) or from the rear.

## Revendications

1. Outil électrique comprenant un moteur électrique (16) destiné à l'entraînement d'un outil (17) avec un arbre du moteur (34), un stator (18), un induit (32) avec un paquet de bobinage, un collecteur (36) avec des balais (56) et un ventilateur (38), le collecteur (36) étant disposé entre le ventilateur (38) et le paquet de bobinage de l'induit (32), un premier élément de support (20) et un deuxième élément de support (22) étant fixés aux deux extrémités du stator (18), et les balais (56) étant entourés par le premier élément de support (20), **caractérisé en ce que** le premier élément de support (20) est réalisé en tant qu'anneau de conduction d'air, lequel permet une canalisation de l'air entre le ventilateur (38) et l'extrémité du moteur électrique (16) lui faisant face le long de l'induit (32) et des balais (56).

2. Outil électrique selon la revendication 1, **caractérisé en ce que** le stator (18) est réalisé en tant que stator autoporteur (18), **en ce que** les balais (56) sont fixés sur le premier élément de support (20) avec des fixations de balais (54), et **en ce que** l'arbre du moteur (34) est monté au niveau des deux éléments de support (20, 22) ou de pièces fixées dessus.

3. Outil électrique selon la revendication 1 ou 2, **caractérisé en ce qu'**au moins un commutateur (73, 90) est fixé sur les éléments de support (20, 22).

4. Outil électrique selon la revendication 1, 2, ou 3, **caractérisé en ce qu'**un dispositif électronique de commande (23) destiné à la commande du moteur électrique (16) est réceptionné au niveau de l'un des deux éléments de support (22).

5. Outil électrique selon l'une des revendications précédentes, **caractérisé en ce que** les balais (56) avec fixation de balais (54) et au moins un commutateur (73) sont réceptionnés au niveau du premier (20) des éléments de support (20, 22), et **en ce que** le dispositif électronique de commande (23) et au moins un commutateur (90) sont réceptionnés au niveau du deuxième (22) des éléments de support (20, 22).

6. Outil électrique selon l'une des revendications précédentes, **caractérisé en ce que** les deux éléments de support (20, 22) sont en liaison avec un boîtier (12).

7. Outil électrique selon l'une des revendications précédentes, **caractérisé en ce qu'**une tête d'outil (14), dans laquelle l'outil (17) peut être inséré, est fixée sur le premier élément de support (20).

8. Outil électrique selon la revendication 7, **caractérisé en ce que** l'arbre du moteur (34) est tourné sur des paliers (39, 40) au niveau de la tête d'outil (14) et du deuxième élément de support (22).

9. Outil électrique selon la revendication 8, **caractérisé en ce que** la tête d'outil (14) présente un engrenage (21).

10. Outil électrique selon l'une des revendications 6 à 9, **caractérisé en ce qu'**au moins au niveau du premier élément de support (20) un commutateur (73, 90) est fixé, lequel peut être actionné par l'intermédiaire d'une surface d'activation (27, 28) réceptionnée au niveau du boîtier (12).

11. Outil électrique selon l'une des revendications précédentes, **caractérisé en ce qu'**au niveau du premier élément de support (20), des fixations de balais (54) se faisant face sont réceptionnées.

12. Outil électrique selon l'une des revendications précédentes, **caractérisé en ce qu'**au niveau du premier élément de support (20), on prévoit des moyens (59) destinés à la liaison électrique entre les balais (56) et le stator (18).

13. Outil électrique selon la revendication 11 ou 12, **caractérisé en ce qu'**au niveau du premier élément de support (20), on prévoit une surface de prise effilée (24) dans la zone entre les deux fixations de balais (54) se faisant face.

14. Outil électrique selon l'une des revendications 11 à 13, **caractérisé par** un boîtier (12), lequel est réalisé de manière ovale dans la zone des balais (56).

15. Outil électrique selon l'une des revendications précédentes, **caractérisé en ce qu'**au moins au niveau de l'un des deux éléments de support (20, 22) on prévoit au moins une surface d'activation (27, 28) destinée à actionner un élément de commutation (74, 91) d'un commutateur (73, 90).

16. Outil électrique selon l'une des revendications précédentes, **caractérisé en ce que** les éléments de support (20, 22) sont fabriqués en une matière isolante, de préférence une matière synthétique.

17. Outil électrique selon l'une des revendications précédentes, **caractérisé en ce qu'**au moins un commutateur (52, 73, 90) ou détecteur est prévu, lequel présente deux conducteurs de lumière (63, 64, 66, 67, 71, 72), un émetteur et un récepteur, ainsi qu'un élément de commande (53, 74, 91) destinés à influencer les signaux lumineux transmis entre les conducteurs de lumière (63, 64, 66, 67, 71, 72).

18. Outil électrique selon la revendication 17, **caractérisé en ce qu'**un élément porteur (60) destiné à la réception des conducteurs de lumière (63, 64, 66, 67, 71, 72) est prévu, lequel présente un corps profilé (61), dans lequel une pluralité de creux (62) sont prévus, dans lesquels on peut placer les conducteurs de lumière (63, 64, 66, 67, 71, 72).

19. Outil électrique selon la revendication 18, **caractérisé en ce que** le corps profilé (61) présente des logements (86) pour des éléments d'émission ou de réception (87) associés aux conducteurs de lumière (63, 64, 66, 67, 71, 72) ou pour des éléments de commutation destinés à influencer le rayonnement, lequel est transmis par les conducteurs de lumière (63, 64, 66, 67, 71, 72).

20. Outil électrique selon la revendication 18 ou 19, **caractérisé en ce que** le corps profilé (61) présente des logements (86) destinés à la fixation de diodes à émission de lumière (87).

21. Outil électrique selon la revendication 18, 19, ou 20, **caractérisé en ce que** le corps profilé (61) coopère avec le boîtier (12) de l'outil électrique (10) destiné à l'étanchement des conducteurs de lumière (63, 64, 66, 67, 71, 72) réceptionnés dans le corps profilé (61) et/ou d'éléments d'émission ou de réception (87) couplés avec, ou des éléments de commutation (74, 91), par rapport à la contamination par de la poussière ou similaire.

22. Outil électrique selon la revendication 21, **caractérisé en ce que** le corps profilé (61) forme avec le boîtier (12) une unité modulaire complètement étanche.

23. Outil électrique selon l'une des revendications 18 à 22, **caractérisé en ce que** le corps profilé (61) se compose d'une matière qui atténue les vibrations et/ou amortit acoustiquement.

24. Outil électrique selon l'une des revendications précédentes, **caractérisé par** au moins trois commutateurs (27, 28) à actionner manuellement, lesquels permettent de préférence un maniement par devant (droite ou gauche) ou par derrière.
